# FASCICULE DE BREVET EUROPEEN

(11) **EP 3 184 829 B1**
(45) Date de publication et mention de la délivrance du brevet: **06.02.2019**
(21) Numéro de dépôt: 16201590.3
(22) Date de dépôt: 01.12.2016
(51) Int. Cl.: F16B 39/30

(54) **SYSTÈME D'ASSEMBLAGE RÉGLABLE PAR COMPRESSION**
DURCH KOMPRESSION REGULIERBARES MONTAGESYSTEM
ASSEMBLY SYSTEM ADJUSTABLE BY COMPRESSION

(30) Priorité: 21.12.2015 CH 18752015
(43) Date de publication de la demande: 28.06.2017
(73) Titulaire: Safelock SA, 2735 Malleray (CH)
(72) Inventeur: Kaufmann, Beat, 2735 Malleray (CH); Meyer, Christian, 4225 Brislach (CH)
(74) Mandataire: P&TS SA (AG, Ltd.)

(56) Documents cités:
- EP-A1- 1 391 617
- EP-A1- 2 813 715

## Description

### Domaine technique

La présente invention concerne une tige filetée, un élément taraudé et un système d'assemblage comprenant ladite tige ou ledit élément taraudé, en particulier selon le préambule des revendications 1, 7, 12 et 14, respectivement (EP2813715).

### Etat de la technique

En horlogerie, les vis et les éléments taraudés obéissent le plus souvent aux normes NIHS (Normes de l'Industrie Horlogère Suisse), en particulier aux normes NIHS 06-02 à NIHS 06-06. Il existe également des normes DIN (Deutsches Institut für Normung) pour les vis et élément taraudés, en particulier les normes DIN 13 pour un diamètre supérieur ou égal à 1 mm ou DIN14 pour un diamètre inférieur à 1 mm. Ces normes définissent notamment la forme des filets, le pas, etc. Dans le présent document, une vis ou un élément taraudé sont qualifiés de vis NIHS ou DIN respectivement d'élément taraudé NIHS ou DIN lorsqu'ils sont conformes aux normes NIHS ou DIN, notamment NIHS 06-02 à NIHS 06-06 ou DIN 13 et DIN 14, notamment aux versions des normes NIHS émises en février 1963 ou en novembre 1968. Alternativement, dans le présent document les vis ou éléments taraudés peuvent présenter des tolérances légèrement inférieures ou supérieures (environ 10%) aux normes NIHS ou DIN; on parlera dans ce cas de vis ou écrou similaires NIHS ou DIN.

Les systèmes d'assemblages conformes aux normes NIHS ou DIN ne sont pas autobloquants et doivent donc être collés pour éviter le risque de desserrage accidentel. Classiquement, la colle est appliquée sur la vis avant le serrage et est repartie dans le jeu à flanc de filet lors du serrage de la vis dans le taraudage. Les colles pouvant endommager les éléments autour de la vis, il est important d'enlever l'excès de colle après serrage ce qui implique des opérations supplémentaires qui rallonge le serrage. En outre, le démontage est impossible ou en tout cas difficile.

Alternativement, on connait des assemblages vis-écrou où la vis est engagée en force dans l'écrou. Le document US3133578 décrit un assemblage où la vis présente sur une partie du filetage un diamètre nominal supérieur au diamètre nominal du taraudage de l'écrou. Lorsque la vis est engagée en force dans l'écrou, le serrage s'accompagne d'une déformation irrémédiable du filetage et du taraudage de sorte que ces assemblages sont bien souvent à usage unique.

Il existe également des systèmes autobloquants où la vis comprend une spire avec un profil variable. Le document EP1391617 décrit une vis avec un profil variable de sorte que la distance entre les flancs du filet varie sur une même spire. Ainsi, seule la portion la plus large de la spire est engagée en force dans le taraudage ce qui fait que le serrage n'est pas uniforme sur une même spire.

Dans le document US 2013236264, le sommet du filet de la vis s'enfonce radialement dans le fond du filet de l'écrou pour sécuriser le serrage de l'assemblage vis-écrou de sorte que le serrage s'effectue sur le diamètre extérieur de la vis. Dans ce système, la matière déplacée par le sommet du filet de la vis lors du serrage s'accumule au fond du filet du taraudage ce qui rend difficile le serrage. De plus, les résidus de matières déplacées peuvent également détériorer le filetage et le taraudage.

En horlogerie, des vis courtes sont généralement utilisées pour assembler ou régler un mouvement. Lors de l'assemblage ou le réglage, il est souvent nécessaire d'ajuster le serrage en plusieurs fois. Les horlogers ont ainsi besoin de systèmes de serrage autobloquant avec des vis courtes, aptes à être utilisés pour visser des pièces sur quelques spires, donc en quelques tours de vis. Actuellement, on ne connait pas de système d'assemblage autobloquant vis/écrou qui permette d'ajuster progressivement le serrage de la vis dans le taraudage sur quelques spires, par exemple deux à quatre spires, sans détériorer irrémédiablement le filetage et le taraudage, en particulier pour des vis/écrou de diamètre nominale inférieur à 2.75 mm.

### Bref résumé de l'invention

Un but de la présente invention est de proposer une tige filetée ou un élément taraudé exempt ou qui minimise les limitations des tiges ou des éléments taraudés connus.

Un autre but de l'invention est de fournir un système autobloquant qui permette d'assurer un serrage sûr et fiable de la tige filetée dans l'élément taraudé sur un nombre minimum de spire, de préférence sur trois à quatre spires de la tige filetée, en particulier sur deux à trois spires.

Un autre but de l'invention est de fournir un système autobloquant où le serrage peut être ajusté progressivement en plusieurs fois.

Selon l'invention, ces buts, ou au moins une partie de ces buts, sont atteints notamment au moyen d'une tige filetée ou d'un élément taraudé selon les revendications indépendantes.

La tige ou l'élément taraudé selon l'invention présente au moins un flanc convexe qui crée un jeu à flanc de filet négatif sur une partie médiane du flanc, le reste du flanc présentant un jeu à flanc de filet positif par rapport à la tige ou l'élément taraudé.

Le flanc avant et/ou le flanc arrière du filet de la tige respectivement de l'élément taraudé est convexe, dans le plan illustré sur les figures, c'est-à-dire dans le plan parallèle à l'axe longitudinal de la tige/ de l'élément taraudé.

Contrairement à l'art antérieur, le serrage est principalement assuré par contact entre la partie médiane du flanc convexe et le flanc opposé où le jeu à flanc de filet est négatif. La contrainte au niveau des parties des flancs où le jeu est positif est minimisée. Ainsi, les parties du flanc où le jeu est positif permettent de répartir la contrainte de serrage centrée sur la partie médiane sur toute la longueur du flanc, de façon à déplacer temporairement la vis dans le taraudage, et vice versa, pour ajuster le serrage.

Cette solution présente notamment l'avantage par rapport à l'art antérieur de fournir un système autobloquant ajustable, où le serrage est efficace tout en restant ajustable s'il s'avère nécessaire de serrer le système en plusieurs fois.

L'invention concerne une tige filetée extérieurement destinée à être vissée dans un élément taraudé de diamètre nominal inférieur ou égal à 2.75 mm. La tige filetée extérieurement selon l'invention présente un premier type de filet destiné à être vissé dans un élément taraudé dont le diamètre nominal est inférieur ou égal à 2.75 mm, ledit premier type de filet comportant un flanc avant et un flanc arrière, un fond et un sommet entre le flanc avant et le flanc arrière, la tige est caractérisée en ce que le flanc avant et/ou le flanc arrière est convexe, le jeu à flanc de filet entre le(s)dit(s) flanc(s) et un élément taraudé étant alternativement positif près du sommet, négatif dans une partie médiane et positif près du fond, par rapport à un élément taraudé de même diamètre nominal que ladite tige, ledit élément taraudé étant de type NIHS ou DIN et/ou le flanc dudit élément taraudé opposé audit flanc convexe étant droit.

Le premier type de filet de la tige selon l'invention est fileté pour que, avant assemblage, le jeu à flancs de filet de la tige par rapport à l'élément taraudé soit négatif dans la partie médiane du flanc convexe de la tige. Avantageusement, la présence d'un jeu à flanc de filet négatif dans la partie médiane du flanc convexe améliore la stabilité axiale de la tige lors du serrage dans l'élément taraudé. Les parties de part et d'autre de la partie médiane, respectivement près du sommet et près du fond du premier type de filet, ont un jeu à flancs de filet positif. Le jeu positif près du sommet permet notamment une meilleure insertion du filetage de la tige dans le taraudage en réduisant le couple de vissage nécessaire et en fournissant un volume dans lequel la matière déformée par la compression des volumes de superposition peut se déplacer.

La partie médiane du flanc convexe de la tige est destinée à être comprimée contre un flanc opposé du taraudage lors de l'assemblage. Avantageusement, la compression de la partie médiane du flanc convexe du filetage due au jeu à flanc de filet négatif pourra être compensée dans les parties du flanc convexe où le jeu est positif ce qui permet d'ajuster progressivement le serrage, pour l'augmenter ou le diminuer. Cette caractéristique n'est pas présente dans les tiges de l'art antérieur qui n'offrent pas d'espace de décompression sur un flanc du filet de la tige.

Après assemblage, la surface de contact entre la tige et l'élément taraudé comprend au moins une portion de la partie médiane du flanc convexe de la tige. Ainsi, la tige est maintenue dans l'élément taraudé par pression entre le flanc convexe de la tige et le flanc opposé de l'élément taraudé. Le serrage de la tige dans l'élément taraudé est assuré pression selon un axe transversal au flanc convexe de la tige et au flanc de l'élément taraudé opposé, au niveau de la surface de contact. Cela permet de minimiser les inconvénients d'un serrage par pression radiale décrit dans l'art antérieur, comme par exemple la vrille de la spire, une déformation du taraudage ou du filetage au niveau du fond ou du sommet du filet.

Dans un mode de réalisation, la tige selon l'invention est destinée à être visée dans un élément taraudé selon la norme NIHS ou DIN. En particulier, l'élément taraudé est un écrou avec un angle de flanc de 60°.

Dans un mode de réalisation, la tige selon l'invention est destinée à être visée dans un élément taraudé similaire NIHS ou DIN.

Selon un mode de réalisation, la section longitudinale du flanc avant convexe et/ou du flanc arrière convexe de la tige a une forme courbe.

Dans un mode de réalisation, la section longitudinale du flanc avant convexe et/ou du flanc arrière convexe de la tige est formée de segments de droites. Par exemple, pour un élément taraudé avec un angle de flanc de 60°, la surface du flanc convexe de la tige filetée la plus proche du sommet forme un angle de 35° à 45° par rapport à l'axe transversal de la tige, de préférence 40° à 44°. Dans un mode de réalisation, la surface du flanc convexe de la tige filetée la plus proche du fond du filet forme un angle de 15° à 25° par rapport à l'axe transversal de la tige, de préférence 18° à 22°. Les angles mentionnés ci-dessus seront adaptés mutatis mutandis lorsque l'élément taraudé a un angle de flanc différent de 60°.

Selon un mode de réalisation, le jeu à flanc de filet négatif est présent sur au moins une spire du premier type de filet.

Dans un mode préféré de réalisation, le jeu à flanc de filet négatif est présent sur toute la longueur du premier type de filet. Ainsi, cela permet de minimiser ou de supprimer les variations brusques de couple de serrage le long du filet.

Selon un mode de réalisation, le jeu à flanc de filet négatif est compris entre 1 micromètre et 20 micromètre, de préférence entre 4 micromètre et 6 micromètre.

Dans un mode de réalisation, le centre de la partie médiane du flanc convexe est situé environ au milieu du flanc convexe en partant du fond du filet de la tige vers le sommet du filet de la tige.

Dans un mode de réalisation, le centre de la partie médiane du flanc convexe est situé environ au deux tiers du flanc convexe en partant du fond du filet de la tige vers le sommet du filet de la tige.

L'invention concerne aussi un élément taraudé destiné à recevoir une vis de diamètre nominal inférieur ou égal à 2.75 mm. L'élément taraudé intérieurement selon l'invention présente un deuxième type de filet destiné à recevoir une tige filetée dont le diamètre nominal est inférieur ou égal à 2.75 mm, ledit deuxième type de filet comportant un flanc avant et un flanc arrière, un fond et un sommet entre le flanc avant et le flanc arrière, l'élément taraudé est caractérisé en ce que le flanc avant et/ou le flanc arrière est convexe, le jeu à flanc de filet entre le(s)dit(s) flanc(s) et une tige filetée étant alternativement positif près du sommet, négatif dans une partie médiane et positif près du fond, par rapport à une tige filetée de même diamètre nominal que ledit élément taraudé, ladite tige étant de type NIHS ou DIN et/ou le flanc de ladite tige opposé audit flanc convexe étant droit.

Le deuxième type de filet de l'élément taraudé selon l'invention est taraudé pour que, avant assemblage, le jeu à flancs de filet de l'élément taraudé par rapport à la tige soit négatif dans la partie médiane du flanc convexe de l'élément taraudé. Avantageusement, la présence d'un jeu à flanc de filet négatif dans la partie médiane du flanc convexe améliore la stabilité axiale de l'élément taraudé lors du serrage de la tige. Les parties de part et d'autre de la partie médiane, respectivement près du sommet et près du fond du deuxième type de filet, ont un jeu à flancs de filet positif. Le jeu positif près du sommet permet notamment une meilleure insertion du filetage de la tige dans le taraudage, en réduisant le couple de vissage nécessaire et en fournissant un volume dans lequel la matière déformée par la compression des volumes de superposition peut se déplacer.

La partie médiane du flanc convexe de l'élément taraudé est destinée à être comprimée contre un flanc opposé du filetage lors de l'assemblage. Avantageusement, la compression de la partie médiane du flanc convexe de l'élément taraudé due au jeu à flanc de filet négatif pourra être compensée dans les parties du flanc convexe où le jeu est positif. Cette caractéristique n'est pas présente dans les éléments taraudés de l'art antérieur qui n'offrent pas d'espace de décompression sur un flanc du filet de l'élément taraudé.

Après assemblage, la surface de contact entre l'élément taraudé et la tige comprend au moins une portion de la partie médiane du flanc convexe de l'élément taraudé. Ainsi, l'élément taraudé maintient la tige par pression entre le flanc convexe de l'élément taraudé et le flanc opposé de la tige. L'élément taraudé serre la tige par pression selon un axe transversale au flanc convexe de l'élément taraudé et au flanc opposé de la tige, au niveau de la surface de contact, ce qui permet de minimiser les inconvénients d'un serrage par pression radiale décrit dans l'art antérieur, comme par exemple la vrille de la spire, une déformation du taraudage ou du filetage au niveau du fond ou du sommet du filet.

Dans un mode de réalisation, l'élément taraudé selon l'invention est destinée à recevoir une tige filetée selon la norme NIHS ou DIN. En particulier, la vis est une vis avec un angle de flanc de 60°.

Dans un mode de réalisation, l'élément taraudé selon l'invention est destinée à recevoir une vis similaire NIHS ou DIN.

Dans un mode de réalisation, le flanc avant et le flanc arrière du deuxième type de filet de l'élément taraudé sont convexes.

Selon un mode de réalisation, la section longitudinale du flanc avant convexe et/ou du flanc arrière convexe a une forme courbe.

Dans un mode de réalisation, la section longitudinale du flanc avant convexe et/ou du flanc arrière convexe est formée de segments de droites.

Dans un mode de réalisation, le jeu à flanc de filet négatif est présent sur au moins une spire du deuxième type de filet.

Selon un mode de réalisation préférentiel, le jeu à flanc de filet négatif est présent sur toute la longueur du deuxième type de filet. Ainsi, cela permet de minimiser ou de supprimer les variations brusques de couple de serrage le long du filet.

Selon un mode de réalisation, la section du flanc avant convexe et/ou arrière convexe de la tige ou de l'élément taraudé est formée d'une courbe ou de segments de droites.

Dans un mode de réalisation, la section du flanc convexe est formée de segments de droites. Par exemple, pour une tige filetée avec un angle de flanc de 60°, le flanc convexe près du sommet forme un angle de 35° à 45° par rapport à l'axe transversal de l'élément taraudé, de préférence 40° à 44°.

Dans un mode de réalisation, le flanc convexe près du sommet forme un angle de 15° à 25° par rapport à l'axe transversal de l'élément taraudé, de préférence 18° à 22°. Les angles mentionnés ci-dessus seront adaptés mutatis mutandis lorsque la tige filetée a un angle de flanc différent de 60°.

Selon un mode de réalisation de l'élément taraudé selon l'invention, ledit jeu à flanc de filet négatif est compris entre 1 micromètre et 20 micromètre, de préférence entre 4 micromètre et 6 micromètre.

Dans un mode de réalisation, le centre de la partie médiane du flanc convexe est situé environ au milieu du flanc convexe en partant du fond du filet de l'élément taraudé vers le sommet du filet de l'élément taraudé.

Dans un mode de réalisation, le centre de la partie médiane du flanc convexe est situé environ au deux tiers du flanc convexe en partant du fond du filet de l'élément taraudé vers le sommet du filet de l'élément taraudé.

Dans un mode de réalisation, le sommet du premier filet de la tige comprend une partie tronquée, de préférence une partie tronquée présentant une surface lisse. Si l'assemblage s'accompagne d'un déplacement de matière dans le fond du filet, le sommet du filet peut être en contact avec de la matière déplacée. La présence d'une partie tronquée au sommet, en particulier avec une surface lisse, minimise l'adhérence du sommet avec la matière déplacée. En particulier, une tige tronquée présente un diamètre nominal inférieur aux normes NIHS ou DIN.

L'invention concerne un système d'assemblage autobloquant comprenant une tige filetée selon l'invention ou un élément taraudé selon l'invention.

L'invention concerne également un système d'assemblage autobloquant comprenant une tige filetée extérieurement et un élément taraudé, la tige présentant un premier type de filet destiné à être vissé dans l'élément taraudé dont le diamètre nominal est inférieur ou égal à 2.75 mm, ledit premier type de filet comportant un flanc avant et un flanc arrière, un fond et un sommet entre le flanc avant et le flanc arrière, le système est caractérisé en ce que le flanc avant et/ou le flanc arrière est convexe, le jeu à flanc de filet entre le(s)dit(s) flanc(s) et l'élément taraudé étant alternativement positif près du sommet, négatif dans une partie médiane et positif près du fond, par rapport à l'élément taraudé.

L'invention concerne aussi un système d'assemblage autobloquant comprenant un élément taraudé et une tige filetée extérieurement, l'élément taraudé présentant un deuxième type de filet destiné à recevoir la tige filetée dont le diamètre nominal est inférieur ou égal à 2.75 mm, ledit deuxième type de filet comportant un flanc avant et un flanc arrière, un fond et un sommet entre le flanc avant et le flanc arrière, le système est caractérisé en ce que le flanc avant et/ou le flanc arrière est convexe, le jeu à flanc de filet entre le(s)dit(s) flanc(s) et la tige filetée étant alternativement positif près du sommet, négatif dans une partie médiane et positif près du fond, par rapport à la tige filetée.

Dans un mode de réalisation, le système comprend une tige filetée NIHS ou DIN ou un élément taraudé NIHS ou DIN.

Dans un mode de réalisation, le système comprend une tige filetée et un élément taraudé selon leur propre norme spécifique. Dans un mode de réalisation, le système comprend une tige filetée ou un élément taraudé selon leur propre norme spécifique. En particulier, les normes spécifiques sont des normes aux tolérances inférieures aux tolérances des normes NIHS ou DIN.

Lors de l'assemblage, le jeu négatif dans la partie médiane du flanc convexe de la tige ou de l'élément taraudé permet également de guider la matière déplacée dans un premier temps le long du flanc, puis dans un deuxième temps dans le sommet ou le fond du filet de la tige ou de l'élément taraudé. Cela permet ainsi de minimiser la pression radiale ou transversale. Cela permet également de diminuer les contraintes qui s'exercent sur les flancs, le fond ou le sommet du filet de la tige ou de l'élément taraudé. Avantageusement, cela contribue aussi à obtenir un serrage uniforme et stable.

Selon un mode de réalisation du système selon l'invention, le jeu à flanc de filet négatif est compris entre 1 micromètre et 20 micromètre, de préférence entre 4 micromètre et 6 micromètre.

Dans un mode de réalisation, la tige ou l'élément taraudé sont composé de métal ou d'un alliage métallique ou de matériaux non ferreux. Par exemple, les alliages ou métaux sont choisis parmi l'inox, le laiton, le titane, l'acier.

Les termes « tige » et « tige filetée extérieurement » et vis sont interchangeables.

Les termes « élément taraudé » et « élément taraudé intérieurement » et écrou sont interchangeable.

Par « spire », on entend la portion d'hélice correspondant à un pas.

Par « flanc », on entend un côté du filet qui relie le fond au sommet du filet.

Par « filet », on entend une saillie, nervure ou une rainure obtenue par l'opération de filetage ou de taraudage.

Par « jeu à flanc de filet », on entend la distance nominale entre le profil du filet de la tige et le profil du filet de l'élément taraudé avant l'assemblage.

Un jeu est dit positif lorsqu'un espace subsiste entre la tige et l'élément taraudé. Le jeu est dit négatif lorsqu'une dimension nominale d'une portion de la tige est plus grande que la dimension nominale de la partie correspondante de l'élément taraudé; dans ce cas, l'assemblage ne peut se faire que par déformation ou compression de la tige et/ou de l'élément taraudé.

Les caractéristiques décrites pour la tige selon l'invention s'appliquent mutatis mutandis à l'élément taraudé selon l'invention.

Les caractéristiques décrites pour la tige selon l'invention ou l'élément taraudé selon l'invention s'appliquent mutatis mutandis au système d'assemblage selon l'invention.

### Brève description des figures

Des exemples de mise en oeuvre de l'invention sont indiqués dans la description illustrée par les figures annexées dans lesquelles :
La figure 1 illustre un premier mode de réalisation d'un assemblage autobloquant selon l'invention, la tige étant montrée en vue latérale et l'élément taraudé en coupe longitudinale;
La figure 2 illustre une vue en coupe dans l'axe longitudinal de la tige d'une section de spire de tige selon un premier mode de réalisation de l'invention superposée à une vue de coupe dans l'axe longitudinal d'un élément taraudé d'une spire de l'élément taraudé;
La figure 3 illustre une vue en coupe dans l'axe longitudinal de la vis d'une section de spire de tige selon un deuxième mode de réalisation de l'invention engagée dans un élément taraudé;
La figure 4 illustre un troisième mode de réalisation d'un assemblage autobloquant selon l'invention, la tige étant montrée en vue latérale et l'élément taraudé en coupe longitudinale;

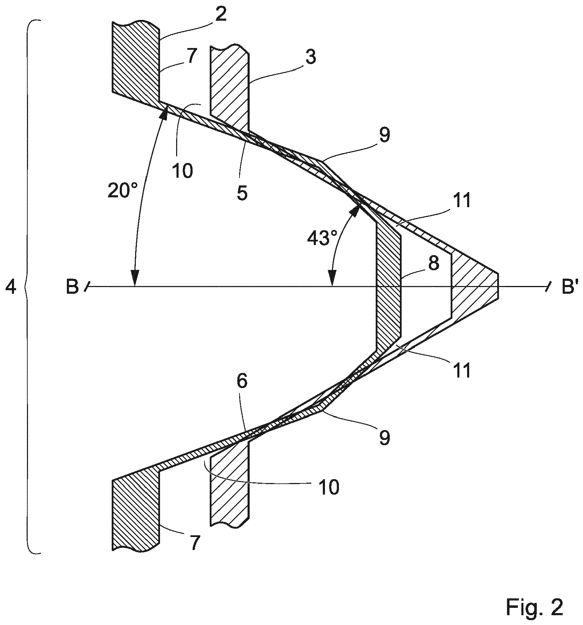

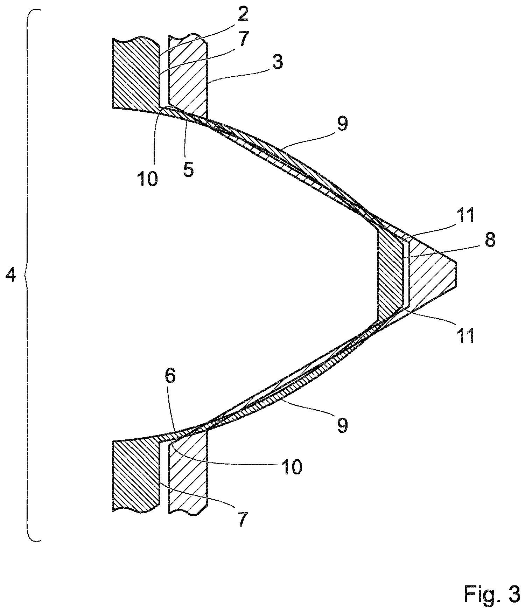

Les figures 2 et 3 représentent des vues de coupe, les traits pleins représentent les contours de tolérances minimales et maximales de la tige et de l'élément taraudé, la matière entre les flancs n'étant pas représentée par soucis de clarté des figures.

### Exemple(s) de mode de réalisation de l'invention

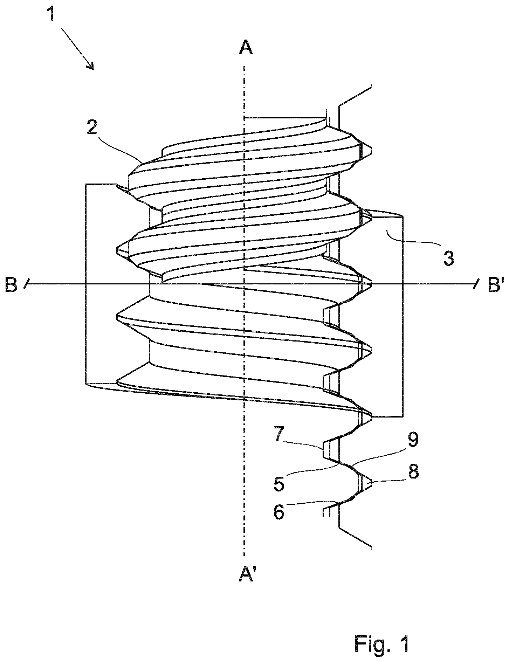

Un premier mode de réalisation d'un assemblage autobloquant est représenté sur la figure 1. Dans ce premier mode de réalisation, l'assemblage autobloquant est un assemblage 1 vis/écrou qui comprend une tige selon la présente invention, par exemple une vis 2 vissée dans un élément taraudé avec une tolérance spéciale, sous la forme d'un écrou 3. L'écrou 3 est un écrou aux tolérances inférieures aux normes NIHS ou DIN. L'assemblage 1 est utilisé en horlogerie pour fixer des éléments du mouvement, par exemple afin de fixer des vis de réglage sur la serge du balancier, ou de l'habillage.

La vis 2 selon l'invention peut être vissée dans un écrou 3 pour obtenir un assemblage autobloquant. L'écrou 3 a dans cet exemple un diamètre nominal égal à 1.4 mm. Cependant, cet exemple n'est pas limitatif et le diamètre nominal de l'écrou peut prendre une autre valeur, par exemple entre 0.2 et 2.75 mm. L'assemblage 1 comprend un axe longitudinale AA' qui traverse la vis 2 et l'écrou 3 dans leurs longueurs. L'assemblage comprend en outre un axe transversal BB', perpendiculaire à l'axe AA', qui traverse la vis 2 et l'écrou 3 dans leurs largeurs.

L'assemblage 1 comprend une vis 2 selon un premier mode réalisation représentée sur la figure 2. La figure 2 représente deux plans de coupe selon l'axe longitudinal de la vis AA' avant assemblage d'une vis 2 et d'un écrou 3. Sur les figures 2 et 3, les deux plans de coupe sont superposés ce qui permet d'illustrer le jeu à flanc de filet de la vis 2 par rapport à l'écrou 3.

Comme illustré sur la figure 2, la vis 2 présente un premier type de filet 4 qui comprend un flanc avant 5 et un flanc arrière 6, un fond 7 et un sommet 8. Le flanc avant 5 et le flanc arrière 6 sont convexes; leur section est ici formée de segments de droite. Chaque flanc 5, 6 comprend une partie médiane 9, constituée ici par une arête hélicoïdale située environ au deux tiers de chaque flanc 5, 6 en partant du fond 7 vers le sommet 8. La partie de chaque flanc 5, 6 entre la partie médiane 9 et le sommet 8 forme un angle de 43° par rapport à l'axe BB'. La partie de chaque flanc entre la partie médiane 9 et le fond 7 forme un angle de 20° par rapport à l'axe BB'. Sur l'assemblage représenté sur la figure 2, la vis 2 présente un jeu à flancs de filet négatif de quelques micromètres, par exemple 5 micromètre, par rapport au taraudage de l'écrou.

La figure 3 représente un deuxième mode de réalisation d'une vis 2 selon l'invention. Comme la figure 2, la figure 3 représente deux plans de coupe selon l'axe longitudinal de la vis et de l'écrou. Contrairement à la vis 2 selon le premier mode de réalisation représentée sur la figure 2, la section des flancs avant et arrières 5,6 de la vis 2 représentée sur la figure 3 est de forme courbe. La vis 2 selon ce deuxième mode de réalisation peut être utilisée à la place de la vis selon le premier mode de réalisation, et être vissée dans un élément taraudé, tel que l'écrou 3 décrit pour la vis selon le premier mode de réalisation. Dans ce deuxième mode de réalisation, la vis présente un jeu à flanc de filet de quelques micromètres, par exemple 5 micromètre, par rapport à l'écrou 3.

Lorsque la vis 2 selon le premier ou deuxième mode de réalisation (figures 2 et 3) est vissée dans un écrou 3 dans un assemblage représenté sur la figure 1, la partie médiane 9 est comprimée dans le taraudage ce qui permet de bloquer la vis 2 dans l'écrou 3. La pression sur la partie médiane 9 provoque un aplanissement au moins partiel du flanc 5,6 dû au contact entre la partie médiane 9 et le flanc du taraudage de l'écrou 3. Alternativement, l'effet autobloquant peut aussi être obtenu par déformation conjointe du flanc convexe du filetage et du flanc opposé du taraudage. Avantageusement, il existe des espaces près du sommet 11 et près fond 10 du filet pour compenser la déformation de la partie médiane 9.

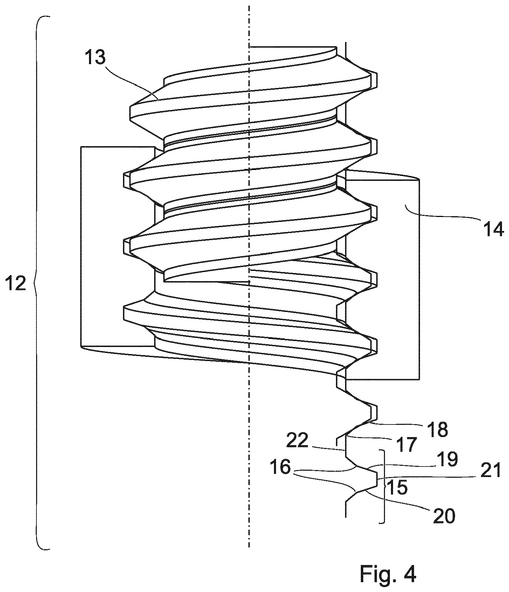

Un troisième mode de réalisation d'un assemblage autobloquant 12 est représenté sur la figure 4, où une vis 13 est vissée dans un élément taraudé selon l'invention, par exemple un écrou 14. La vis 13 est une vis qui présente des tolérances inférieures aux normes NIHS ou DIN et présente ici un diamètre nominal de 1.4 mm. Cependant, cet exemple n'est pas limitatif et le diamètre nominal de la tige peut prendre une autre valeur, par exemple entre 0.2 et 2.75 mm. Le taraudage de l'écrou 14 présente un deuxième type de filet 15 convexe comprenant une partie médiane 16 au jeu à flancs de filet négatif par rapport au flanc de la vis 13. Contrairement à l'assemblage 1 selon le premier mode de réalisation (figure 1), dans ce deuxième mode de réalisation l'effet autobloquant est obtenu par compression de la partie médiane du deuxième type de filet sur le filetage de la vis 13. Alternativement, l'effet autobloquant peut aussi être obtenu par déformation conjointe du flanc convexe du taraudage et du flanc opposé du filetage. Avantageusement, il existe des espaces près du sommet 18 et près du fond 17 du filet pour compenser la déformation de la partie médiane 16.

La tige ou l'élément taraudé selon l'invention peuvent être usiné en utilisant une machine équipée d'un outil approprié (non représenté dans les figures) permettant d'usiner en particulier un flanc convexe d'un filet. Par exemple, il est possible d'utiliser une fraise à fileter pour usiner le filetage ou le taraudage des tiges ou éléments taraudés selon l'invention. La fraise comporte une tige pour la monter dans le mandrin d'une machine et une portion de coupe. La périphérie de la portion de coupe comporte plusieurs peignes, chaque peigne comportant une rangée avec plusieurs dents radiales parallèles entre elles capable d'usiner le sommet, les flancs, en particulier le flanc convexe, et le fond du filet.

### Numéros de référence employés sur les figures

| | |
|---|---|
| 1 | Assemblage vis/écrou selon un premier mode de réalisation |
| 2 | Vis selon l'invention |
| 3 | Ecrou similaire NIHS ou DIN |
| 4 | Premier type de filet |
| 5 | Flanc avant du premier type de filet |
| 6 | Flanc arrière du premier type de filet |
| 7 | Fond du premier type de filet |
| 8 | Sommet du premier type de filet |
| 9 | Partie médiane de la vis |
| 10 | Espace près du fond du filetage |
| 11 | Espace près du sommet du filetage |
| 12 | Assemblage vis/écrou selon un deuxième mode de réalisation |
| 13 | Vis similaire NIHS ou DIN |
| 14 | Ecrou selon l'invention |
| 15 | Deuxième type de filet |
| 16 | Partie médiane de l'écrou |
| 17 | Espace près du fond du taraudage |
| 18 | Espace près du sommet du taraudage |
| 19 | Flanc avant du deuxième type de filet |
| 20 | Flanc arrière du deuxième type de filet |
| 21 | Sommet du deuxième type de filet |
| 22 | Fond du deuxième type de filet |

## Revendications

1. Tige filetée extérieurement (2) présentant un premier type de filet (4) destiné à être vissé dans un élément taraudé (3) dont le diamètre nominal est inférieur ou égal à 2.75 mm, ledit premier type de filet (4) comportant un flanc avant (5) et un flanc arrière (6), un fond (7) et un sommet (8) entre le flanc avant (5) et le flanc arrière (6),
la tige est **caractérisée en ce que** le flanc avant (5) et/ou le flanc arrière (6) est convexe, le jeu à flanc de filet entre le(s)dit(s) flanc(s) et un élément taraudé (3) étant alternativement positif près du sommet (8), négatif dans une partie médiane (9) et positif près du fond (7), par rapport à un élément taraudé (3) de type NIHS ou DIN et de même diamètre nominal que ladite tige (2), ou par rapport à un élément taraudé (3) de même diamètre nominal que ladite tige (2) et dont le flancs opposé audit flanc convexe est droit.

2. Tige filetée (2) selon la revendication précédente, dans laquelle la section du flanc avant convexe (5) et/ou du flanc arrière convexe (6) a une forme courbe dans un plan traversant l'axe longitudinal de la tige filetée.

3. Tige filetée (2) selon l'une des revendications précédentes, dans laquelle la section- du flanc avant convexe (5) et/ou du flanc arrière convexe (6) est formée de segments de droites dans un plan traversant l'axe longitudinal de la tige filetée.

4. Tige filetée (2) selon l'une des revendications précédentes, dans laquelle ledit jeu à flanc de filet négatif est présent sur au moins une spire du premier type de filet (4).

5. Tige filetée (2) selon l'une des revendications précédentes, dans laquelle ledit jeu à flanc de filet négatif est compris entre 1 micromètre et 20 micromètres, de préférence entre 4 micromètre et 6 micromètres.

6. Tige filetée (2) selon l'une des revendications précédentes, dans laquelle le sommet (8) comprend une partie tronquée, de préférence une partie tronquée présentant une surface lisse.

7. Elément taraudé intérieurement (14) présentant un filet (15) destiné à recevoir une tige filetée (13) dont le diamètre nominal est inférieur ou égal à 2.75 mm, ledit filet (15) comportant un flanc avant (19) et un flanc arrière (20), un fond (22) et un sommet (21) entre le flanc avant (19) et le flanc arrière (20),
**caractérisé en ce que** le flanc avant (19) et/ou le flanc arrière (20) est convexe, le jeu à flanc de filet entre le(s)dit(s) flanc(s) et une tige filetée (13) étant alternativement positif près du sommet (21), négatif dans une partie médiane (16) et positif près du fond (22), par rapport à une tige (13) filetée de type NIHS ou DIN et de même diamètre nominal que ledit élément taraudé (14), et/ou rapport à une tige (13) filetée de type NIHS ou DIN et de même diamètre nominal que ledit élément taraudé (14) et dont le flanc opposé audit flanc convexe est droit.

8. Elément taraudé (14) selon la revendication précédente, dans lequel la section longitudinale du flanc avant convexe (19) et/ou du flanc arrière convexe (20) a une forme courbe.

9. Elément taraudé (14) selon l'une des revendications 7 à 8, dans lequel la section longitudinale du flanc avant convexe (19) et/ou du flanc arrière convexe (20) est formée de segments de droites.

10. Elément taraudé (14) selon l'une des revendications 7 à 9, dans lequel ledit jeu à flanc de filet négatif est présent sur au moins une spire du deuxième type de filet (15).

11. Elément taraudé (14) selon l'une des revendications 7 à 10, dans lequel ledit jeu à flanc de filet négatif est compris entre 1 micromètre et 20 micromètre, de préférence entre 4 micromètre et 6 micromètre.

12. Système d'assemblage autobloquant (1, 12) comprenant une tige filetée extérieurement (2) et un élément taraudé (3), la tige (2) présentant un premier type de filet (4) destiné à être vissé dans l'élément taraudé (3) dont le diamètre nominal est inférieur ou égal à 2.75 mm, ledit premier type de filet (4) comportant un flanc avant (5) et un flanc arrière (6), un fond (7) et un sommet (8) entre le flanc avant (5) et le flanc arrière (6),
le système (1,12) est **caractérisé en ce que** le flanc avant (5) et/ou le flanc arrière (6) est convexe, le jeu à flanc de filet entre le(s)dit(s) flanc(s) et l'élément taraudé (3) étant alternativement positif près du sommet (8), négatif dans une partie médiane (9) et positif près du fond (7), par rapport à l'élément taraudé (3).

13. Système d'assemblage (1, 12) selon la revendication précédente dans lequel l'élément taraudé est un élément taraudé NIHS ou DIN (3).

14. Système d'assemblage autobloquant (1, 12) comprenant un élément taraudé (14) et une tige filetée extérieurement (13), l'élément taraudé (14) présentant un deuxième type de filet (15) destiné à recevoir la tige filetée dont le diamètre nominal est inférieur ou égal à 2.75 mm, ledit deuxième type de filet (15) comportant un flanc avant (19) et un flanc arrière (20), un fond (22) et un sommet (21) entre le flanc avant (19) et le flanc arrière (20),
le système (1, 12) est **caractérisé en ce que** le flanc avant (19) et/ou le flanc arrière (20) est convexe, le jeu à flanc de filet entre le(s)dit(s) flanc(s) et la tige filetée (13) étant alternativement positif près du sommet (21), négatif dans une partie médiane (16) et positif près du fond (22), par rapport à la tige filetée (13).

15. Système d'assemblage (1, 12) selon la revendication précédente, dans lequel la tige filetée est une tige filetée NIHS ou DIN (13).

## Patentansprüche

1. Aussengewindestange (2) mit einem ersten Gewindetyp (4) zum Einschrauben in ein Gewindeelement (3), dessen Nenndurchmesser kleiner als oder gleich 2,75 mm ist, wobei der besagte erste Gewindetyp (4) eine Vorderflanke (5) und eine Rückflanke (6), einen Boden (7) und eine Decke (8) zwischen der Vorderflanke (5) und der Rückflanke (6) aufweist,
wobei die Stange **dadurch gekennzeichnet ist, dass** die Vorderflanke (5) und/oder die Rückflanke (6) konvex ist, wobei das Flankenspiel zwischen der besagten Flanke (den besagten Flanken) und einem Gewindeelement (3) abwechselnd in der Nähe der Decke (8) positiv, in einen mittleren Teil (9) negativ, und nahe dem Boden (7) positiv ist, in Bezug auf ein Gewindeelement (3) vom NIHS- oder DIN-Typ und mit dem gleichen Nenndurchmesser wie der besagte Stab (2) oder in Bezug auf ein Gewindeelement (3) mit dem gleichen Nenndurchmesser wie die besagte Stange (2) und dessen der besagten konvexen Flanke gegenüberstehende Flanke gerade ist.

2. Gewindestange (2) gemäss dem vorhergehenden Anspruch, worin der Abschnitt der konvexen Vorderflanke (5) und/oder der konvexen Rückflanke (6) in einer durch die Längsachse der Gewindestange verlaufenden Ebene eine gekrümmte Form aufweist.

3. Gewindestange (2) gemäss einem der vorhergehenden Ansprüche, worin der Abschnitt der konvexen Vorderflanke (5) und/oder der konvexen Rückflanke (6) aus geraden Abschnitten in einer die Längsachse der Geraden kreuzenden Ebene der Gewindestange gebildet ist.

4. Gewindestange (2) gemäss einem der vorhergehenden Ansprüche, worin das besagte negative Flankenspiel an mindestens einer Windung des ersten Gewindetyps (4) vorhanden ist.

5. Gewindestange (2) gemäss einem der vorhergehenden Ansprüche, worin das besagte negative Flankenspiel zwischen 1 Mikrometer und 20 Mikrometer, vorzugsweise zwischen 4 Mikrometer und 6 Mikrometer, liegt.

6. Gewindestange (2) gemäss einem der vorhergehenden Ansprüche, worin die Decke (8) einen abgeschnittenen Abschnitt, vorzugsweise einen abgeschnittenen Abschnitt mit einer glatten Oberfläche, aufweist.

7. Innengewindeelement (14) mit einem Gewinde (15) zur Aufnahme einer Gewindestange (13), deren Nenndurchmesser kleiner als oder gleich 2,75 mm ist, wobei das besagte Gewinde (15) eine Vorderflanke (19) und eine Rückflanke (20), einen Boden (22) und eine Decke (21) zwischen der Vorderflanke (19) und der Rückflanke (20) aufweist,
**dadurch gekennzeichnet, dass** die Vorderflanke (19) und/oder die Rückflanke (13) konvex ist, wobei das Flankenspiel zwischen der besagten Flanke (den besagten Flanken) und einem Gewindeelement (13) abwechselnd in der Nähe der Decke (21) positiv, in einen mittleren Teil (16) negativ, und nahe dem Boden (22) positiv ist, in Bezug auf ein Gewindeelement (13) vom NIHS- oder DIN-Typ und mit dem gleichen Nenndurchmesser wie das besagte Gewindeelement (14) und/oder in Bezug auf ein Gewindeelement (13) vom NIHS- oder DIN-Typ und mit dem gleichen Nenndurchmesser wie das besagte Gewindeelement (14) und dessen der besagten konvexen Flanke gegenüberstehende Flanke gerade ist.

8. Gewindeteil (14) gemäss dem vorhergehenden Anspruch, worin der Längsabschnitt der konvexen Vorderflanke (19) und/oder der konvexen Rückflanke (20) eine gekrümmte Form aufweist.

9. Gewindeteil (14) gemäss einem der Ansprüche 7 bis 8, worin der Längsabschnitt der konvexen Vorderflanke (19) und/oder der konvexen Rückflanke (20) aus geraden Segmenten gebildet ist.

10. Gewindeelement (14) gemäss einem der Ansprüche 7 bis 9, worin das besagte negative Flankenspiel an mindestens einer Windung des zweiten Gewindetyps (15) vorhanden ist.

11. Gewindeelement (14) gemäss einem der Ansprüche 7 bis 10, worin das besagte negative Flankenspiel zwischen 1 Mikrometer und 20 Mikrometer, vorzugsweise zwischen 4 Mikrometer und 6 Mikrometer, liegt.

12. Selbstverriegelndes Montagesystem (1, 12) mit einer Aussengewindestange (2) und einem Gewindeelement (3), wobei die Stange (2) eine erste Art von Gewinde (4) aufweist, das in das Gewindeelement (3) schraubbar ist, dessen Nenndurchmesser kleiner als oder gleich 2,75 mm ist, wobei die besagte erste Art von Gewinde (4) eine Vorderflanke (5) und eine Rückflanke (6), einen Boden (7) und eine Decke (8) zwischen der Vorderflanke (5) und der Rückflanke (6) aufweist,
wobei das System (1, 12) **dadurch gekennzeichnet ist, dass** die Vorderflanke (5) und/oder die Rückflanke (6) konvex ist, wobei das Flankenspiel zwischen der besagten Flanke (den besagten Flanken) und dem Gewindeelement (3) abwechselnd in der Nähe der Decke (8) positiv, in einen mittleren Teil (9) negativ, und nahe dem Boden (7) positiv ist, in Bezug auf das Gewindeelement (3).

13. Montagesystem (1, 12) gemäss dem vorhergehenden Anspruch, worin das Gewindeelement ein NIHS- oder DIN-Gewindeelement (3) ist.

14. Selbstverriegelndes Montagesystem (1, 12) mit einem Gewindeelement (14) und einer Aussengewindestange (13), wobei das Gewindeelement (14) eine zweite Art von Gewinde (15) zur Aufnahme der Gewindestange aufweist, dessen Nenndurchmesser kleiner als oder gleich 2,75 mm ist, wobei die besagte zweite Art von Gewinde (15) eine Vorderflanke (19) und eine Rückflanke (20), einen Boden (22) und eine Decke (21) zwischen der Vorderflanke (19) und der Rückflanke (20) aufweist,
wobei das System (1, 12) **dadurch gekennzeichnet ist, dass** die Vorderflanke (19) und/oder die Rückflanke (20) konvex ist, wobei das Flankenspiel zwischen der besagten Flanke (den besagten Flanken) und dem Gewindeelement (13) abwechselnd in der Nähe der Decke (21) positiv, in einen mittleren Teil (16) negativ, und nahe dem Boden (22) positiv ist, in Bezug auf das Gewindeelement (13).

15. Montagesystem (1, 12) gemäss dem vorhergehenden Anspruch, worin die Gewindestange eine NIHS- oder DIN-Gewindestange (13) ist.

## Claims

1. An externally threaded rod (2) having a first type of thread (4) to be screwed into a threaded element (3) whose nominal diameter is less than or equal to 2.75 mm, said first type of thread (4) having a front flank (5) and a rear flank (6), a bottom (7) and a top (8) between the front flank (5) and the rear flank (6),
wherein the rod is **characterized in that** the front flank (5) and/or the rear flank (6) is convex, the flank clearance between said flank(s) and a threaded element (3) being alternately positive near the top (8), negative in a middle part (9) and positive near the bottom (7), with respect to a threaded element (3) of the NIHS or DIN type and of the same nominal diameter as said rod (2), or with respect to a threaded element (3) of the same nominal diameter as said rod (2) and therefore the flank opposite said convex flank is straight.

2. Threaded rod (2) according to the preceding claim, wherein the section of the convex front flank (5) and/or the convex rear flank (6) has a curved shape in a plane passing through the longitudinal axis of the threaded rod.

3. Threaded rod (2) according to one of the preceding claims, wherein the section of the convex front flank (5) and/or the convex rear flank (6) is formed of segments of straight lines in a plane crossing the longitudinal axis of the threaded rod.

4. Threaded rod (2) according to one of the preceding claims, wherein said negative flank clearance is present on at least one turn of the first type of threading (4).

5. Threaded rod (2) according to one of the preceding claims, wherein said negative flank clearance is comprised between 1 micrometer and 20 micrometers, preferably between 4 micrometers and 6 micrometers.

6. Threaded rod (2) according to one of the preceding claims, wherein the top (8) comprises a truncated portion, preferably a truncated portion having a smooth surface.

7. An internally threaded element (14) having a thread (15) for receiving a threaded rod (13) whose nominal diameter is less than or equal to 2.75 mm, said thread (15) having a front flank (19) and a rear flank (20), a bottom (22) and a top (21) between the rear flank (19) and the rear flank (20),
**characterized in that** the front flank (19) and/or the rear flank (20) is convex, the flank clearance between said flank(s) and a threaded rod (13) being alternately positive near the top (21), negative in a middle part (16) and positive near the bottom (22), with respect to a threaded rod (13) of the NIHS or DIN type and of the same nominal diameter as said threaded element (14), and/or with respect to a threaded rod (13) of the NIHS or DIN type and of the same nominal diameter as said threaded element (14) and whose flank opposite said convex flank is straight.

8. Threaded element (14) according to the preceding claim, wherein the longitudinal section of the convex front flank (19) and/or of the convex rear flank (20) has a curved shape.

9. Threaded element (14) according to one of claims 7 to 8, wherein the longitudinal section of the convex front flank (19) and/or of the convex rear flank (20) is formed of straight segments.

10. Threaded element (14) according to one of the claims 7 to 9, wherein said negative flank clearance is present on at least one turn of the second type of thread (15).

11. Threaded element (14) according to one of claims 7 to 10, wherein said negative flank clearance is comprised between 1 micrometer and 20 micrometers, preferably between 4 micrometers and 6 micrometers.

12. Self-locking assembly system (1, 12) comprising an externally threaded rod (2) and a threaded element (3), the rod (2) having a first type of thread (4) designed to be screwed into the threaded element (3) whose nominal diameter is less than or equal to 2.75 mm, said first type of thread (4) having a front flank (5) and a rear flank (6), a bottom (7) and a top (8) between the front flank (5) and the rear flank (6),
wherein the system (1,12) is **characterized in that** the front flank (5) and/or the rear flank (6) is convex, the flank clearance between said flank(s) and the threaded element (3) being alternately positive near the top (8), negative in a middle part (9) and positive near the bottom (7), with respect to the threaded element (3).

13. Assembly system (1, 12) according to the preceding claim, wherein the threaded element is a NIHS or DIN threaded element (3).

14. A self-locking assembly system (1, 12) comprising a threaded element (14) and an externally threaded rod (13), the threaded element (14) having a second type of thread (15) for receiving the threaded rod whose nominal diameter is less than or equal to 2.75 mm, said second type of thread (15) having a front flank (19) and a rear flank (20), a bottom (22) and a top (21) between the front flank (19) and the rear flank (20),
wherein the system (1, 12) is **characterized in that** the front flank (19) and/or the rear flank (20) is convex, the flank clearance between said flank(s) and the threaded rod (13) being alternately positive near the top (21), negative in a middle portion (16) and positive near the bottom (22), relative to the threaded rod (13).

15. Assembly system (1, 12) according to the preceding claim, wherein the threaded rod is a NIHS or DIN threaded rod (13).
